# EUROPÄISCHE PATENTANMELDUNG

(11) **EP 3 100 617 A1**
(43) Veröffentlichungstag der Anmeldung: **07.12.2016**
(21) Anmeldenummer: 16169665.3
(22) Anmeldetag: 13.05.2016
(51) Int. Cl.: A23K 40/10, A23K 10/30, A23K 10/35, A23K 20/174, A23K 20/20, A23K 20/28, A23K 50/20, A23K 50/10, A23K 50/30

(54) **TIERFUTTERZUSATZ UND VERFAHREN ZU DESSEN HERSTELLUNG**

(30) Priorität: 05.06.2015 DE 102015108915
(71) Anmelder: Emsland-Stärke GmbH, 49824 Emlichheim (DE)
(72) Erfinder: Herrmann, Martina, 49824 Emlichheim (DE); Zweers, Heinrich, 49849 Wilsum (DE)
(74) Vertreter: Scholz, Volker

(57) **Zusammenfassung**

Die vorliegende Erfindung betrifft eine Zusammensetzung, umfassend ein Gemisch eines Trägerstoffs und eines Additivs, wobei der Trägerstoff ausgewählt ist aus zumindest einem stärkehaltigen Pflanzendehydrat, vorzugsweise zumindest einem Kartoffeldehydrat, zumindest einem Leguminosendehydrat oder Mischungen derselben wobei jedes Dehydrat vorzugsweise kaltquellend ist, und wobei das Additiv bevorzugt ausgewählt ist aus zumindest einem Mineralstoff, zumindest einem Vitamin oder Mischungen derselben; sowie dem Einsatz dieser Zusammensetzung in einem Verfahren zur Herstellung eines Granulats oder von Pellets, umfassend die Schritte a) Bereitstellen einer erfindungsgemäßen Zusammensetzung und b) Verarbeiten der Zusammensetzung bei einer Temperatur von höchstens 50°C, um das Granulat oder die Pellets zu erhalten, sowie die Verwendung der erhaltenden Granulate und Pellets als Tierfuttermittelzusatz.

## Beschreibung

Die vorliegende Erfindung betrifft einen Tierfutterzusatz, ein Verfahren zu dessen Herstellung und Ausgangsmaterialien, die in diesem Verfahren verwendet werden können.

Eine Vielzahl von Tierfutterprodukten ist aus dem Stand der Technik bekannt. Die bekannten Tierfutterzusammensetzungen weisen allerdings oft den Nachteil auf, dass diese zwar geeignet sind, den Nährstoffbedarf von Nutztieren zu decken, allerdings einen mangelnden Gehalt an Mineralstoffen oder Vitaminen haben. Mineralstoffe und Vitamine sind essentiell, um die Gesundheit von Nutztieren zu fördern und aufrechtzuerhalten.

Prinzipiell ist es möglich, Mineralstoffe und Vitamine in die bekannten Nutztierfutter einzubringen. Entsprechende Prozesse des Einbringens sind allerdings nur unter hohem Verfahrensaufwand zu realisieren. Eine Möglichkeit, diesen verfahrenstechnischen Aufwand zu verringern, ist es, Additive, wie Mineralien und Vitamine, getrennt in ein anderes Material einzubringen, das eine ähnliche Beschaffenheit wie das Tierfutter hat, etwa ein Granulatmaterial, und dieses dann auf makroskopischer Ebene mit dem Tierfutter zu mischen. Ein entsprechendes, die Additive enthaltendes Material soll erfindungsgemäß als Tierfutterzusatz verstanden werden.

Aus dem Stand der Technik ist bekannt, dass Vitamine oder Mineralien mit Weizenstärke vermischt werden können und dass dieses Gemisch dann in einem Heißextrusionsverfahren, d.h. bei Temperaturen von mindestens 120°C, zu Granulaten geformt werden kann.

Ein solches Verfahren ist allerdings deshalb nachteilhaft, da das Verfahren aufgrund der benötigten hohen Temperaturen mit einem hohen Energiebedarf und damit verbundenen hohen Kosten einhergeht. Darüber hinaus können durch die hohen Temperaturen die Additive, die dem Tierfutter beigegeben werden sollen, geschädigt werden. Dies ist insbesondere dann der Fall, wenn der durch Heißextrusion hergestellte Futtermittelzusatz Vitamine enthält, da diese besonders empfindlich gegenüber hohen Temperaturen sind. In diesem Fall ist es daher notwendig, größere Mengen Vitamine einzubringen, um den Verlust durch hitzeinduzierte Zerstörung auszugleichen. Hiermit einhergehend sind erhöhte Materialkosten.

Es ist daher die Aufgabe der vorliegenden Erfindung, einen Tierfutterzusatz bereitzustellen, der Nachteile des Stands der Technik überwindet, insbesondere bei niedrigeren Temperaturen hergestellt werden kann, um so Energie- und Materialkosten zu senken.

Diese Aufgabe wird gelöst durch ein Gemisch eines Trägerstoffs und eines Additivs, wobei der Trägerstoff ausgewählt ist aus zumindest einem stärkehaltigen Pflanzendehydrat, vorzugsweise zumindest einem Kartoffeldehydrat, zumindest einem Leguminosendehydrat oder Mischungen derselben, wobei jedes Dehydrat vorzugsweise kaltquellend ist, und wobei das Additiv bevorzugt ausgewählt ist aus zumindest einem Mineralstoff, zumindest einem Vitamin oder Mischungen derselben.

Die erfindungsgemäße Zusammensetzung löst die Aufgabe insbesondere dadurch, dass sie in einem erfindungsgemäßen Verfahren bei niedrigen Temperaturen in ein Granulat oder in Pellets überführt werden kann, wobei diese Produkte als Tierfutterzusatz verwendbar sind.

Erfindungsgemäß kann als Trägerstoff irgendein stärkehaltiges Pflanzendehydrat eingesetzt werden. Unter einem stärkehaltigen Pflanzendehydrat sollen erfindungsgemäß Pflanzen und/oder Pflanzenteile verstanden werden, die, vorzugsweise im Wesentlichen, noch bevorzugter in einem Anteil von über 50 Gewichtsprozent, bezogen auf das Gesamtgewicht des Dehydrats, Stärke enthalten. Unter solche stärkehaltigen Pflanzendehydrate fallen somit insbesondere stärkehaltige Früchte, Knollen, etc. von Pflanzen. Unter einem Dehydrat soll erfindungsgemäß eine stärkehaltige Pflanze oder ein stärkehaltiger Pflanzenteil verstanden werden, bei der bzw. dem das Wasser im Wesentlichen entfernt worden ist. Ein bevorzugter Restwassergehalt ist hierbei kleiner als 9 Gewichtsprozent, bezogen auf das Gesamtgewicht des Dehydrats.

Die kaltquellenden Kartoffel- und Leguminosendehydrate, die bevorzugt als Trägerstoff in der erfindungsgemäßen Zusammensetzung dienen, können auf aus dem Stand der Technik bekannte Weise hergestellt werden. Eine Möglichkeit zur Herstellung der Dehydrate beginnt mit der Herstellung einer wässrigen Suspension, die dann durch Erhitzen vorverkleistert und nach einem Trocknungsschritt vermahlen wird. Die so erhaltenen Dehydrate sind bereits in kaltem Wasser (das heißt zumindest bei Raumtemperatur) löslich. Ein geeignetes Ausgangsprodukt für die Dehydrate sind insbesondere die Stärke-haltigen Bestandteile von Kartoffeln oder Erbsen. Das Trocknen kann beispielsweise mittels eines Walzentrockners erfolgen.

Zu Trocknung kann prinzipiell jedes bekannte Trocknungsverfahren verwendet werden.

Während es erfindungsgemäß auch denkbar ist, beispielsweise heißquellende Materialien, wie beispielsweise Kochstärke, einzusetzen, zeichnen sich die kaltquellenden Kartoffel- und Leguminosendehydrate dadurch aus, dass sie mit einem geringeren Energieaufwand und dementsprechend geringeren Kosten verarbeitet werden können. Zusätzlich ist eine schonende Herstellung der Granulate bzw. Pellets möglich. Auch wird die Fließfahigkeit der trockenen Mischung vor einem Verarbeitungsschritt, beispielsweise dem Extrudieren, verbessert, da eine Brückenbildung vermieden werden kann.

Es ist bevorzugt, dass der Mineralstoff ein Zeolith ist.

Durch die Verwendung eines Zeoliths in der erfindungsgemäßen Zusammensetzung wird die Herstellung eines Tierfutterzusatzes ermöglicht, mittels dessen eine erhöhte Milchproduktion bei dem verzehrenden Tier generiert werden kann. Gegenüber herkömmlichen Verarbeitungsformen von Zeolith in Form eines Pulvers, war eine Verwendung im Tierfutter nur unter Staubbildung möglich, was zu einer inhomogenen und ungenauen Portionierung führte.

Insgesamt ist das Material, das erfindungsgemäß zur Herstellung der Dehydrate verwendet werden kann, nicht begrenzt, solange dieses bevorzugt kaltquellend ist. Als Leguminosen können erfindungsgemäß beispielsweise Ackerbohne, Erbse, Lupine oder Soja eingesetzt werden.

Bevorzugt ist vorgesehen, dass das kaltquellende Kartoffel- oder Leguminosendehydrat Kartoffel- oder Leguminosenflocken, -granulate, -stärke, -mehl, -fasern oder Mischungen derselben umfasst.

Diese Materialien, die vorzugsweise zur Herstellung der kaltquellenden Kartoffel- oder Leguminosendehydrate dienen können, sind besonders leicht zugänglich und ermöglichen eine einfache Verarbeitung.

Das Vermischen des Trägerstoffs mit dem Additiv kann unter Verwendung bekannter Mischverfahren erreicht werden, z.B. unter Einsatz eines Paddelmischers.

Die Aufgabe wird ferner gelöst durch ein Verfahren zur Herstellung eines Granulats oder von Pellets, umfassend die Schritte a) Bereitstellen einer erfindungsgemäßen Zusammensetzung und b) Verarbeiten der Zusammensetzung bei einer Temperatur von höchstens 50°C zum Granulat oder den Pellets.

Durch den erfindungsgemäßen Verarbeitungsschritt, der bei Temperaturen von höchsten 50°C durchgeführt wird, wird eine schonende Herstellung des Granulats oder der Pellets erreicht. Auf diese Weise können auch temperaturempfindliche Stoffe, wie etwa Vitamine, in das Granulat/die Pellets eingebracht werden, ohne signifikante Mengen des temperaturempfindlichen Materials zu zerstören. Auf diese Weise ist es zum einen möglich, große Mengen des temperaturempfindlichen Materials einzubringen. Zum anderen ist es möglich, geringe Mengen des temperaturempfindlichen Materials bei Einsatz lediglich geringer Mengen an Ausgangsstoffen einzubringen, da eine Zerstörung weitgehend unterbunden wird.

Ebenso ermöglicht es das erfindungsgemäße Verfahren, erfindungsgemäße Granulate/Pellets unter gegenüber dem Stand der Technik erheblich reduziertem Energiebedarf bereitzustellen.

Mögliche Verfahren zur Herstellung von Granulaten oder Pellets sind aus dem Stand der Technik wohlbekannt. Die aus dem Stand der Technik bekannten Verfahren sind grundsätzlich ohne Einschränkung geeignet, in dem erfindungsgemäßen Verfahren in dem Verarbeitungsschritt eingesetzt zu werden.

Dabei ist vorzugsweise vorgesehen, dass das Verarbeiten einen Schritt der Extrusion, des Walzens, der Kaltquellung oder beliebige Kombinationen derselben und optional einen Schritt der Nachtrocknung umfasst.

Ein Granulat im Sinne der Erfindung ist ein aus vielen kleinen, festen Partikeln, etwa Körnern oder Kugeln, bestehendes Material. Ein Granulat zeichnet sich dadurch aus, dass die Teilchen eine makroskopische Größe haben, also weder durch Quanteneffekte noch durch thermische Bewegung beeinflusst werden und nur über Kontaktkräfte (Reibungskraft) wechselwirken.

Ein Pellet im Sinne der vorliegenden Anmeldung ist ein kleiner Körper aus verdichtetem Material, vorzugsweise in Kugel- oder Zylinderform.

Das Granulat bzw. die Pellets weisen vorzugsweise einen Durchmesser von etwa 5mm auf.

Erfindungsgemäß beschreibt eine Extrusion das Herauspressen einer dickflüssigen, härtbaren Masse unter Druck aus einer form gebenden Öffnung, wobei das Herauspressen kontinuierlich erfolgt. Die formgebende Form kann hierbei als Düse betrachtet werden. Vorzugsweise ist hierbei eine Kaltextrusion, das heißt eine Extrusion bei niedrigen Drücken, Temperaturen und Scherkräften, vorgesehen.

Das Walzen im Sinne der vorliegenden Erfindung ist ein Umformungsverfahren, bei dem der Werkstoff zwischen zwei oder mehreren rotierenden Werkzeugen, nämlich Walzen, umgeformt wird. Besonders bevorzugt ist hierbei ein Kaltwalzprozess bis 50°C.

Erfindungsgemäß können neben den bevorzugten Schritten oder anstatt dieser Schritte geeignete Zerkleinerungsvorgänge vorgesehen sein, in denen ein Flächen- oder Volumenmaterial, das beispielsweise durch Walzen erhalten werden kann, in kleinere Stücke zerteilt wird, um so ein Granulat oder Pellets zu erhalten.

Darüber hinaus wird die Aufgabe gelöst durch ein Granulat oder eine Vielzahl von Pellets, erhältlich nach dem erfindungsgemäßen Verfahren.

Das erfindungsgemäße Granulat bzw. die erfindungsgemäßen Pellets zeichnen sich dadurch aus, dass diese, aufgrund des schonenden Herstellungsverfahrens bei niedrigen Temperaturen, einen geringen Gehalt an Zersetzungsprodukten, etwa durch Zersetzung von Vitaminen, aufweisen.

Schließlich wird die Aufgabe gelöst durch die Verwendung des erfindungsgemäßen Granulats als Tierfutterzusatz.

Durch die erfindungsgemäße Verwendung der erfindungsgemäßen Granulate und/oder Pellets als Tierfutterzusatz wird eine einfache und akkurate Dosierung des Tierfuttermittelzusatzes zu dem eigentlichen Tierfutter ermöglicht. Vor allem können hierbei die im vorangehenden beschriebenen Additive dem Tierfutter in einfacher Weise zugeführt werden.

Dabei ist bevorzugt, dass der Tierfutterzusatz dem Futter von Nutztieren, vorzugsweise Kühen, Rindern, Schweinen, Schafen oder Pferden, zugegeben wird.

Durch die Verwendung im Zusammenhang mit den erfindungsgemäß vorgesehenen Nutztieren kann auf einfache Weise ein auf die Nutztiere zugeschnittener Spurenelements-, Mineralstoff- oder Vitaminbedarf gedeckt werden. Insbesondere im Zusammenhang mit Kühen kann durch die erfindungsgemäße Verwendung für den Fall, dass das Additiv Zeolith ist, eine erhöhte Milchproduktion erreicht werden.

Überraschenderweise wurde durch die Erfinder gefunden, dass durch die im Vorangehenden beschriebenen Ausführungsformen die Aufgabe, die der Erfindung zugrunde liegt, derart gelöst wird, das Additive in schonender Weise, das heißt ohne die Zersetzung der Additive, und unter geringem Energieaufwand in einem Tierfutterzusatz bereitgestellt werden können.

Die in der vorstehenden Beschreibung sowie in den Ansprüchen offenbarten Merkmale der Erfindung können sowohl einzeln als auch in beliebiger Kombination für die Verwirklichung der Erfindung in ihren verschiedenen Ausführungsformen wesentlich sein.

## Patentansprüche

1. Zusammensetzung, umfassend ein Gemisch eines Trägerstoffs und eines Additivs, wobei der Trägerstoff ausgewählt ist aus zumindest einem stärkehaltigen Pflanzendehydrat, vorzugsweise zumindest einem Kartoffeldehydrat, zumindest einem Leguminosendehydrat oder Mischungen derselben, wobei jedes Dehydrat vorzugsweise kaltquellend ist, und wobei das Additiv bevorzugt ausgewählt ist aus zumindest einem Mineralstoff, zumindest einem Vitamin oder Mischungen derselben.

2. Zusammensetzung nach Anspruch 1, wobei der Mineralstoff ein Zeolith ist.

3. Zusammensetzung nach Anspruch 1 oder 2, wobei das Kartoffel- oder Leguminosendehydrat Kartoffel- oder Leguminosenflocken, -granulate, -stärke, -mehl, -fasern oder Mischungen derselben umfasst.

4. Verfahren zur Herstellung eines Granulats oder von Pellets, umfassend die Schritte
a) Bereitstellen einer Zusammensetzung nach einem der vorangehenden Ansprüche; und
b) Verarbeiten der Zusammensetzung bei einer Temperatur von höchstens 50°C zum Granulat oder den Pellets.

5. Verfahren nach Anspruch 4, wobei das Verarbeiten einen Schritt der Extrusion, des Walzens, der Kaltquellung oder beliebige Kombinationen derselben und optional einen Schritt des Nachtrocknens umfasst.

6. Granulat oder Vielzahl von Pellets, erhältlich nach einem Verfahren nach einem der Ansprüche 4 oder 5.

7. Verwendung des Granulats nach Anspruch 6 als Tierfutterzusatz.

8. Verwendung nach Anspruch 7, wobei der Tierfutterzusatz dem Futter von Nutztieren, vorzugsweise Kühen, Rindern, Schweinen, Schafen oder Pferden, zugegeben wird.
